# EUROPEAN PATENT APPLICATION

(11) **EP 3 163 895 A1**
(43) Date of publication of application: **03.05.2017**
(21) Application number: 14882120.0
(22) Date of filing: 02.09.2014
(51) Int. Cl.: H04N 21/654, H04N 21/258

(54) **SYSTEM AND METHOD FOR REMOTE CONTROL OF SMART TELEVISION**

(30) Priority: 30.06.2014 CN 201410303162
(71) Applicant: Huizhou TCL Mobile Communication Co., Ltd., Huizhou, Guangdong 516006 (CN)
(72) Inventor: ZHENG, Yu, HuiZhou, Guangdong 516006 (CN); ZHOU, Baozhong, HuiZhou, Guangdong 516006 (CN)
(74) Representative: Petraz, Gilberto Luigi
(86) International application number: PCT/CN2014/085741
(87) International publication number: WO 2016/000308

(57) **Abstract**

A system for remotely controlling a smart television and a control method are disclosed. The system includes a channel management module for adjusting a resource of channel numbers and adjusting distribution and use of a corresponding resource according to the resource of the channel numbers after receiving a remote control request, an application management module for receiving a media file and a resource of an application and deploying the media file and the resource of the application in the smart television after receiving the remote control request, and a remote control module for transmitting the remote control request to the two above-mentioned modules after receiving an operation instruction. The present invention improves the remote control ability of the system.

## Description

### BACKGROUND OF THE INVENTION

### 1. Field of the Invention

The present invention generally relates to a field of smart televisions, and more particularly to a system for remotely controlling a smart television and a control method.

### 2. Description of Prior Art

With the development of electronic techniques and the constant increase of people's living standards, smart televisions have gradually entered into people's lives, and the penetration rate thereof has gradually increased. Products, such as set-top boxes, multimedia boxes, and home gateways which can implement most functions of a smart television, can increasingly convert general televisions into smart televisions or similar devices.

A situation in which televisions serve as a media expression tool at home will exist for a long time.

Currently, in a basic behavior of a television device which is controlled by a broadcast industry, a mode combining a remote control with a screen (which certainly may also include a mode combining an accessory device and a remote control) will exist for a long time.

However, television channel management and application management of conventional smart televisions and television-like devices cannot preferably implement a remote control, cannot be combined with other businesses, and are not conveniently operated and utilized.

Consequently, the prior art needs to be improved and developed.

### DISCLOSURE OF THE INVENTION

### Technical Problems

Based on the above-mentioned deficiencies in the prior art, an object of the present invention is to provide a system for remotely control a smart television and a control method aiming to solve the problems that television channel management and application management of the conventional smart televisions and television-like devices cannot be remotely controlled well.

### Solutions to the Problems

### Technological Solutions

A control method of a system for remotely controlling a smart television comprises:
Transmitting a remote control request to a channel management module and/or an application management module by a remote control module after receiving an operation instruction;
Performing an operation to add, distribute, delete, modify, adjust an order of, incorporate, split, refresh, or reset a resource of channel numbers after the channel management module receives the remote control request, wherein the resource of the channel number includes a functional component for displaying and referencing the channel numbers, an application, and an application call; and
Receiving a media file and/or a resource of the application and deploying the media file and/or the resource of the application after the application management module receives the remote control request.

In the control method of the system for remotely controlling the smart television, the resource of the application includes an installation program, an executable program, an address, a reference, or a shortcut access manner for storing the installation program or the executable program, a web address, or a reference.

The control method of the system for remotely controlling the smart television further comprises the step of determining whether the corresponding resource of the channel numbers is allowed to be modified after the channel management module receives the remote control request.

In the control method of the system for remotely controlling the smart television, a corresponding modification operation is performed if it is determined that the corresponding resource of the channel numbers is allowed to be modified.

The control method of the system for remotely controlling the smart television further comprises the step of determining whether the resource of the channel numbers required to be modified is ready after the step of determining that the corresponding resource of the channel numbers is allowed to be modified.

In the control method of the system for remotely controlling the smart television, a corresponding modification operation is performed according to the remote control request if it is determined that the resource of the channel numbers required to be modified is ready.

The control method of the system for remotely controlling the smart television further comprises the step of transmitting an identification instruction indicating the operation is successful after the channel management module finishes the operation.

In the control method of the system for remotely controlling the smart television, the deploying step by the application management module specifically comprises storing, installing, copying, forwarding, broadcasting, referencing, or directly or indirectly downloading the media file and/or the resource of the application required to be deployed.

A system for remotely controlling a smart television comprises a channel management module, an application management module, and a remote control module. The remote control module is communicatively coupled to the channel management module and the application management module.

The remote control module is utilized for transmitting a remote control request to the channel management module and/or the application management module after receiving an operation instruction.

The channel management module is utilized for correspondingly adjusting a resource of channel numbers and/or adjusting distribution and use of a corresponding resource according to the resource of the channel numbers, after receiving the remote control request.

The application management module is utilized for correspondingly receiving a media file and/or a resource of an application and deploying the media file and/or the resource of the application in the smart television, after receiving the remote control request.

The system for remotely controlling the smart television further comprises a communication module utilized for communicating the remote control module with the channel management module and the application management module.

In the system for remotely controlling the smart television, the resource of the channel numbers includes a functional component for displaying and referencing the channel numbers, an application, and an application call.

In the system for remotely controlling the smart television, the resource of the application includes an installation program, an executable program, an address, a reference, or a shortcut access manner for storing the installation program or the executable program, a web address, or a reference.

A control method of a system for remotely controlling a smart television comprises:
Transmitting a remote control request to a channel management module and/or an application management module by the remote control module after receiving an operation instruction;
Adjusting a resource of channel numbers and/or adjusting distribution and use of a corresponding resource according to the resource of the channel numbers, after the channel management module receives the remote control request; and
Receiving a media file and/or a resource of an application and deploying the media file and/or the resource of the application in the smart television, after the application management module receives the remote control request.

In the control method of the system for remotely controlling the smart television, the resource of the channel numbers includes a functional component for displaying and referencing the channel numbers, an application, and an application call.

In the control method of the system for remotely controlling the smart television, the resource of the application includes an installation program, an executable program, an address, a reference, or a shortcut access manner for storing the installation program or the executable program, a web address, or a reference.

In the control method of the system for remotely controlling the smart television, the step of adjusting the resource of the channel numbers and/or adjusting the distribution and the use of the corresponding resource according to the resource of the channel numbers specifically comprises performing an operation to add, distribute, delete, modify, adjust an order of, incorporate, split, refresh, or reset the resource of the channel numbers.

The control method of the system for remotely controlling the smart television further comprises the step of determining whether the corresponding resource of the channel numbers is allowed to be modified after the channel management module receives the remote control request. If yes, a corresponding modification operation is performed.

The control method of the system for remotely controlling the smart television further comprises the step of determining whether the resource of the channel numbers required to be modified is ready after the step of determining that the corresponding resource of the channel numbers is allowed to be modified. If yes, a corresponding modification operation is performed.

The control method of the system for remotely controlling the smart television further comprises the step of transmitting an identification instruction indicating the operation is successful after the channel management module finishes the operation.

In the control method of the system for remotely controlling the smart television, the deploying step by the application management module specifically comprises storing, installing, copying, forwarding, broadcasting, referencing, or directly or indirectly downloading the media file and/or the resource of the application required to be deployed.

### Advantageous Effects of the Invention

### Advantageous Effects

The present invention improves the channel management manner and behavior of the television devices, the set-top boxes, and the corresponding software systems in the prior art. The present invention can provide a device suitable for providing a flexible channel management and use in a smart television. The present invention can increase the remote control ability of the device or the system without changing an end user's habits, provide convenient and fast user experience for the end user, and bring various abilities of deploying services for the broadcast television industry.

### BRIEF DESCRIPTION OF THE DRAWINGS

### Description of the Drawings

FIG. 1 is a functional block diagram of a system for remotely controlling a smart television in accordance with a preferred embodiment of the present invention.
FIG. 2 is a flowchart of a method for remotely controlling a smart television in accordance with a preferred embodiment of the present invention.
FIG. 3 is a flowchart of a method for remotely controlling a smart television in accordance with another preferred embodiment of the present invention.

### BEST EMBODIMENT FOR CARRYING OUT THE INVENTION

### BEST MODE FOR CARRYING OUT THE INVENTION

The present invention provides a method and a system for remotely controlling a smart television. For a better understanding of the aforementioned content of the present invention, preferable embodiments are illustrated in accordance with the attached figures for further explanation. It should be understood that specific embodiments described herein are merely intended to explain the present invention, but are not intended to limit the present invention.

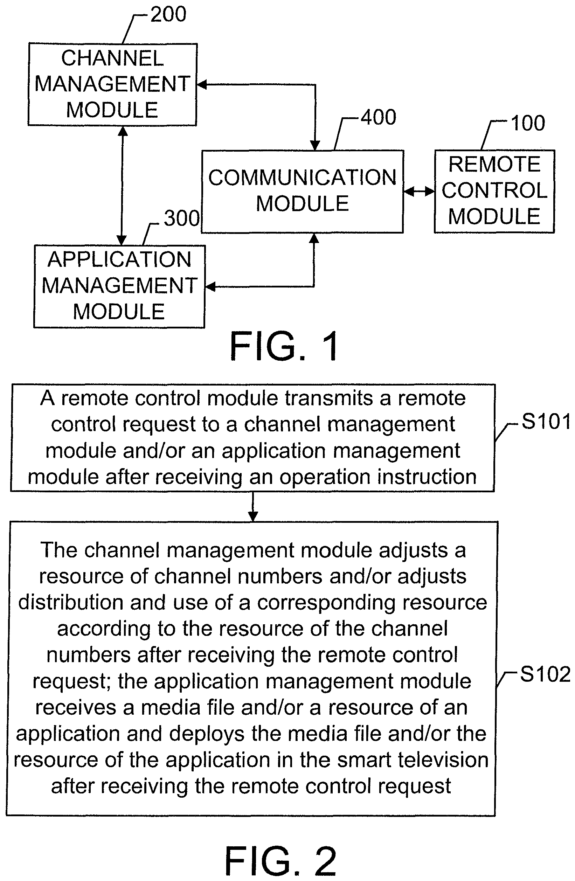

Please refer to FIG. 1, which is a functional block diagram of the system for remotely controlling the smart television in accordance with a preferred embodiment of the present invention. As shown in FIG. 1, the system comprises a channel management module 200, an application management module 300, and a remote control module 100. The remote control module 100 is communicatively coupled to the channel management module 200 and the application management module 300.

The remote control module 100 is utilized for transmitting a remote control request to the channel management module 200 and/or the application management module 300 after receiving an operation instruction.

The channel management module 200 is utilized for correspondingly adjusting a resource of channel numbers and/or adjusting distribution and use of a corresponding resource according to the resource of the channel numbers after receiving the remote control request.

The application management module 300 is utilized for correspondingly receiving a media file and/or a resource of an application and deploying the media file and/or the resource of the application in the smart television.

In the present embodiment, the channel management module 200 is a module responsible for managing and processing information of the channel numbers and content mapping (the information of the channel numbers and the content mapping are called the resource of the channel numbers) with respect to an operation of the channel numbers in a device or a system (a smart television or a system of a smart television). The channel numbers managed by the module include a channel display and an information display of a conventional television, a broadcast television, an IP television, and a set-up box in a regular channel system, a functional component for displaying and referencing the channel numbers, an application, an application call, and an application call which has a condition and a parameter. The channel management module 200 can manage the resource of the channel numbers which are referenced and expressed by the channel numbers, a definition of each of the channel numbers, and an update of the definition. The channel management module 200 can further receive an inquiry for the resource of the channel numbers from any other module in the device and the system and receive any other request. In summary, the channel management module 200 can adjust and change the resource of the channel numbers which are managed by the channel management module 200 after receiving the remote control request from the remote control module 100.

Furthermore, the channel management module 200 can further have a function which changes the distribution and the use of the resources (such as the display, the storing, and the calculation in the device or the system) according to the resource of the channel numbers via a direct or an indirect execution method with respect to a specific type of the device or the system. The function is optional. The function can be given to a corresponding functional module according to the device or the system.

In the present embodiment of the present invention, for a user, the channel numbers, which are represented by digital numbers, mean identification of content and/or operating units in the device, for example, in a television, a computer device, a set-top box, a network multimedia box, a home gateway device, an enterprise or a home multimedia gateway device, a software, or a user interface. In other words, the user can directly access identification information of a corresponding content or function of the device by inputting or adjusting the digit numbers representing the channel numbers via a remote control, a similar device, a remote control software, a local or a remote menu, or buttons on the device. The channel numbers and the operability thereof are valuable resources in the device or the system.

The application management module 300 is a functional module for managing and executing a media file and an application excluded in television program channels in the device or the system.

The application management module 300 provides and updates the corresponding information of the media file and the application for the channel management module 200 to manage. The corresponding information includes but is not limited to the information of the media file (e.g. name, duration, type, and so on), the application, the application call, and the application call which has the condition and the parameter.

After receiving the operation instruction, the remote control module 100 transmits the remote control request to the channel management module 200 and/or the application management module 300, manages the resource of the channel numbers, and remotely requests the application management module 300 to perform the corresponding operation with respect to the media file and the resource of the application. The remote control module 100 and the channel management module 200 are operated on different physical devices. For example, the remote control module 100 may be a functional module in a backend service operation system for controlling a remote smart set-top box, a television, or a smart media device. Alternatively, the remote control module 100 may be a tool software which is operated on a small device to modify a channel of the remote smart television.

After the remote control module 100 transmits the request, the application management module 300 can receive the media file and the resource of the application and deploy the media file and the resource of the application. In the present embodiment of the present invention, the resource of the application includes an installation program, an executable program, an address, a reference, or a shortcut access manner for storing the installation program or the executable program, a web address, or a reference. The resource may also include an existing program applicable to the device or the system, a resource file which is executed and accessed by a runtime environment, or an address or a reference which is stored by the resource.

A specific operation which is performed by the channel management module 200 includes an operation to add, distribute, delete, modify, adjust an order of, incorporate, split, refresh, or reset the resource of the channel numbers. An operated target includes content which is recorded in an entry of the channel numbers (i.e. the resource of the channel numbers). Certainly, the target may be the corresponding information of the media file, the application, the application call, and the application call which has the condition and the parameter.

Furthermore, as shown in FIG. 1, the system for remotely controlling the smart television comprises a communication module 400 for communicating the remote control module 100 with the channel management module 200 and the application management module 300.

The communication module 400 can adopt different communication technologies according to different specific applications. For example, the communication module 400 sets up a link, authenticates, and maintains the safety of the communication between the remote control module 100 and the channel management module 200 or the application management module 300 via a WLAN wireless communication, a cellular data communication, or a Bluetooth communication.

In order to manage the information of the channel numbers and the content mapping with respect to the operation of the channel numbers in the device or the system, the channel management module 200 maintains a table constituted by the information of the resource of the channel numbers. Each entry in the table includes the following information:
1. A channel number;
2. Description information for displaying the channel numbers on smart television;
3. A property corresponding to the content of the channel numbers, that is, the channel numbers representing a television program information, a media file, a call of the media file, an application, or a corresponding call of the application;
4. An operation method for the corresponding content of the channel numbers; the operation method being understandable and operable by the device or the system and being a method for distributing and using the resource (such as the display, the storing, and the calculation of the device or the system); the method including activating or switching the display of a program channel, using a media file according to a record of the operation method, initiating or calling one or more applications, initiating or calling one or more specific applications with a predetermined parameter, or accessing a target directed to a web address and performing a task according to a characteristic of the device or the system;
5. Other corresponding information of the device or the system, for example, introduction, preview, and so on of the corresponding content of the channel numbers.

Based on the above-mentioned method, the present invention further provides a control method of a system for remotely controlling a smart television. As shown in FIG. 2, the control method comprises the following steps.

In Step S101, a remote control module transmits a remote control request to a channel management module and/or an application management module after receiving an operation instruction.

In step S102, the channel management module adjusts a resource of channel numbers and/or adjusts distribution and use of a corresponding resource according to the resource of the channel numbers after receiving the remote control request. The application management module receives a media file and/or a resource of an application and deploys the media file and/or the resource of the application in the smart television after receiving the remote control request.

The resource of the channel number includes a functional component for displaying and referencing the channel numbers, an application, and an application call. The resource of the application includes an installation program, an executable program, an address, a reference, or a shortcut access manner for storing the installation program or the executable program, a web address, or a reference.

Furthermore, in step S102, the step of adjusting the resource of channel numbers and/or adjusting the distribution and the use of the corresponding resource according to the resource of the channel numbers specifically includes an operation to add, distribute, delete, modify, adjust an order of, incorporate, split, refresh, or reset the resource of the channel numbers. The specific detailed technology with respect to the above-mentioned step is described in the above-mentioned device and is not repeated herein.

Furthermore, in step S102, it is determined whether the resource of the channel numbers is allowed to be modified after the channel management module receives the remoted control request. If yes, the corresponding modification operation is performed. The specific detailed technology with respect to the above-mentioned step is described in the above-mentioned device and is not repeated herein.

Furthermore, in step S102, it is further determined whether the resource of the channel numbers required to be modified is ready after the resource of the channel numbers is allowed to be modified. If yes, the corresponding modification operation is performed according to the remote control request. The specific detailed technology with respect to the above-mentioned step is described in the above-mentioned device and is not repeated herein.

Furthermore, in step S102, the channel management module transmits an identification instruction indicating that the operation is successful to the remote control module after finishing the operation. The specific detailed technology with respect to the above-mentioned step is described in the above-mentioned device and is not repeated herein.

Furthermore, in step S102, the deploying step by the application management module includes storing, installing, copying, forwarding, broadcasting, referencing, or directly or indirectly downloading the media file and/or the resource of the application. The specific detailed technology with respect to the above-mentioned step is described in the above-mentioned device and is not repeated herein.

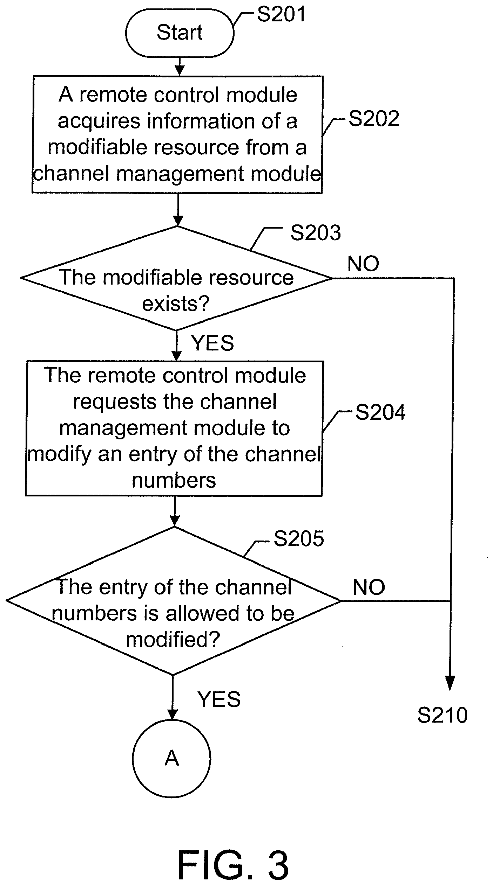

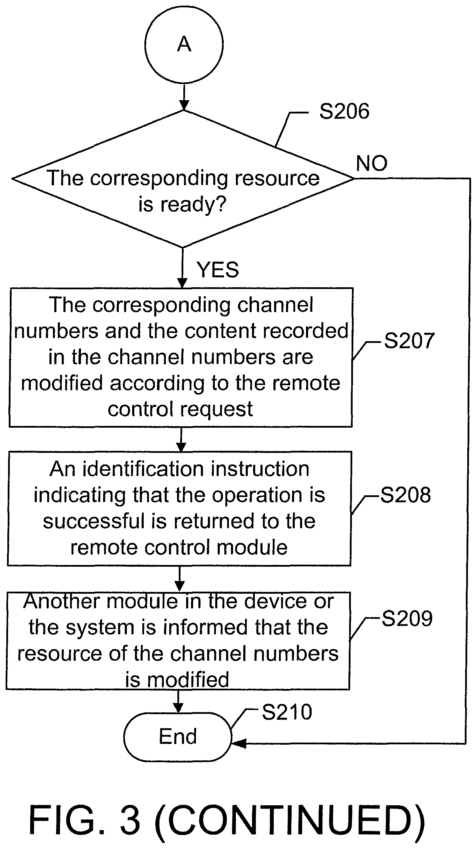

FIG. 3 is a flowchart of a method for remotely controlling a smart television in accordance with another preferred embodiment of the present invention. As shown in FIG. 3, the method comprises the following steps.

In step S201, the method starts.

In step S202, a remote control module acquires information of a modifiable resource from a channel management module.

When the remote control module needs to manage a resource of channel numbers in a remote device or a system (a smart television or a system thereof), the remote control module acquires the information of the modifiable resource (i.e. the resource of the channel numbers) from the channel management module after a link is set up with the device or the system. If there is no resource of a modifiable channel number in the remote device or system for any reason, the remote control module stops a further operation.

In step S203, it is determined whether the modifiable resource exists, if yes, going to step S204, otherwise, going to step S210.

When the remote control module is informed that the resource of the channel numbers which can be remotely controlled exists, the remote control module transmits a request for modifying the resource of the channel numbers to the channel management module.

In step S204, the remote control module requests the channel management module to modify an entry of the channel numbers.

In step S205, the channel management module checks whether the entry of the channel numbers is allowed to be modified, if yes, going to step S206, otherwise, going to step S210.

When the entry is allowed to be modified, it means that the entry of the channel numbers corresponding to the modification request and the resource to be modified are in a modifiable state. When the modification is not allowed in a runtime environment of the device or the system, the channel management module informs the remote control module that the entry of the channel numbers cannot be operated and the channel management module refuses a further operation.

In step S206, it is determined whether the corresponding resource is ready, if yes, going to step S207, otherwise, going to step 210.

When the corresponding resource is ready, it means that the following runtime environment has the required resource with respect to the entry of the channel numbers. When content corresponding to an entry of a new modified channel number does not exist in the device or the system, the channel management module informs the remote control module that the corresponding resource is lacking locally. The channel management module refuses a further operation. In response to the lacking of the corresponding resource, the remote control module is coupled to the application management module and transmits the content of the resource (e.g. the media file, the application, and the corresponding resource) to the application management module. After receiving the resource, the application management module adopts a corresponding operation according to the acquired resource. The corresponding operation includes storing, installing, copying, forwarding, broadcasting, referencing, or directly or indirectly downloading the media file and/or the resource of the application. When the resource is locally ready, the remote control module can initiate a modification request again.

In step S207, the corresponding channel numbers and the content recorded in the channel number are modified according to the remote control request.

After the condition of the resource is identified, one or more designated entries of the channel numbers are modified according to the request from the remoted control module.

In step S208, an identification instruction indicating that the operation is successful is returned to the remote control module.

In step S209, another module in the device or the system is informed that the resource of the channel numbers is modified. For example, the application management module is informed.

After the modification, the corresponding channel numbers and the content in the device or the system are changed when another module in the device or the system references the corresponding channel numbers and the content.

In step S210, the method ends.

In summary, the present invention improves the channel management manner and behavior of the television devices, the set-top boxes, and the corresponding software systems in the prior art. The present invention can provide a device suitable for providing a flexible channel management and use in a smart television. The present invention can increase the remote control ability of the device or the system without changing an end user's habits, provide convenient and fast user experience for the end user, and bring various abilities of deploying services for the broadcast television industry.

As is understood by a person skilled in the art, the foregoing preferred embodiments of the present invention are illustrative rather than limiting of the present invention. It is intended that various modifications and similar arrangements are to be included within the spirit and scope of the appended claims, the scope of which should be accorded the broadest interpretation so as to encompass all such modifications and similar structures.

## Claims

1. A control method of a system for remotely controlling a smart television, comprising:
transmitting a remote control request to a channel management module and/or an application management module by a remote control module after receiving an operation instruction;
performing an operation to add, distribute, delete, modify, adjust an order of, incorporate, split, refresh, or reset a resource of channel numbers after the channel management module receives the remote control request, wherein the resource of the channel numbers includes a functional component for displaying and referencing the channel numbers, an application, and an application call; and
receiving a media file and/or a resource of the application and deploying the media file and/or the resource of the application after the application management module receives the remote control request.

2. The control method of the system for remotely controlling the smart television of claim 1, wherein the resource of the application includes an installation program, an executable program, an address, a reference, or a shortcut access manner for storing the installation program or the executable program, a web address or a reference.

3. The control method of the system for remotely controlling the smart television of claim 1, wherein after the channel management module receives the remote control request, the control method further comprises:
determining whether the corresponding resource of the channel numbers is allowed to be modified.

4. The control method of the system for remotely controlling the smart television of claim 3, wherein a corresponding modification operation is performed if it is determined that the corresponding resource of the channel numbers is allowed to be modified.

5. The control method of the system for remotely controlling the smart television of claim 4, wherein after the step of determining that the corresponding resource of the channel numbers is allowed to be modified, the control method further comprises:
determining whether the resource of the channel numbers required to be modified is ready.

6. The control method of the system for remotely controlling the smart television of claim 5, wherein a corresponding modification operation is performed according to the remote control request if it is determined that the resource of the channel numbers required to be modified is ready.

7. The control method of the system for remotely controlling the smart television of claim 1, further comprising:
transmitting an identification instruction indicating the operation is successful after the channel management module finishes the operation.

8. The control method of the system for remotely controlling the smart television of claim 1, wherein the deploying step by the application management module specifically comprises:
storing, installing, copying, forwarding, broadcasting, referencing, or directly or indirectly downloading the media file and/or the resource of the application required to be deployed.

9. A system for remotely controlling a smart television, comprising a channel management module, an application management module, and a remote control module, the remote control module communicatively coupled to the channel management module and the application management module;
the remote control module utilized for transmitting a remote control request to the channel management module and/or the application management module after receiving an operation instruction;
the channel management module utilized for correspondingly adjusting a resource of channel numbers and/or adjusting distribution and use of a corresponding resource according to the resource of the channel numbers, after receiving the remote control request; and
the application management module utilized for correspondingly receiving a media document and/or a resource of an application and deploying the media file and/or the resource of the application in the smart television, after receiving the remote control request.

10. The system for remotely controlling the smart television of claim 9, further comprising:
a communication module utilized for communicating the remote control module with the channel management module and the application management module.

11. The system for remotely controlling the smart television of claim 9, wherein the resource of the channel numbers includes a functional component for displaying and referencing the channel numbers, an application, and an application call.

12. The system for remotely controlling the smart television of claim 9, wherein the resource of the application includes an installation program, an executable program, an address, a reference, or a shortcut access manner for storing the installation program or the executable program, a web address, or a reference.

13. A control method of a system for remotely controlling a smart television of claim 9, comprising:
transmitting a remote control request to a channel management module and/or an application management module by the remote control module after receiving an operation instruction;
adjusting a resource of channel numbers and/or adjusting distribution and use of a corresponding resource according to the resource of the channel numbers, after the channel management module receives the remote control request; and
receiving a media document and/or a resource of an application and deploying the media file and/or the resource of the application in the smart television, after the application management module receives the remote control request.

14. The control method of the system for remotely controlling the smart television of claim 13, wherein the resource of the channel numbers includes a functional component for displaying and referencing the channel numbers, an application, and an application call.

15. The control method of the system for remotely controlling the smart television of claim 13, wherein the resource of the application includes an installation program, an executable program, an address, a reference, or a shortcut access manner for storing the installation program or the executable program, a web address, or a reference.

16. The control method of the system for remotely controlling of the smart television of claim 13, wherein the step of adjusting the resource of the channel numbers and/or adjusting the distribution and the use of the corresponding resource according to the resource of the channel numbers specifically comprises:
performing an operation to add, distribute, delete, modify, adjust an order of, incorporate, split, refresh, or reset the resource of the channel numbers.

17. The control method of the system for remotely controlling the smart television of claim 13, wherein after the channel management module receives the remote control request, the control method further comprises:
determining whether the corresponding resource of the channel numbers is allowed to be modified, and if yes a corresponding modification operation is performed.

18. The control method of the system for remotely controlling the smart television of claim 17, wherein after the step of determining that the corresponding resource of the channel numbers is allowed to be modified, the control method further comprises:
determining whether the resource of the channel numbers required to be modified is ready, and if yes a corresponding modification operation is performed.

19. The control method of the system for remotely controlling the smart television of claim 13, further comprising:
transmitting an identification instruction indicating the operation is successful after the channel management module finishes the operation.

20. The control method of the system for remotely controlling the smart television of claim 13, wherein the deploying step by the application management module specifically comprises:
storing, installing, copying, forwarding, broadcasting, referencing, or directly or indirectly downloading the media file and/or the resource of the application required to be deployed.
